# EUROPEAN PATENT APPLICATION

(11) **EP 3 647 291 A1**
(43) Date of publication of application: **06.05.2020**
(21) Application number: 18824639.1
(22) Date of filing: 25.06.2018
(51) Int. Cl.: C03C 27/06, E06B 3/673

(54) **PRODUCTION METHOD FOR GLASS PANEL UNIT**

(30) Priority: 30.06.2017 JP 2017129892
(71) Applicant: Panasonic Intellectual Property Management Co., Ltd., Osaka-shi, Osaka 540-6207 (JP)
(72) Inventor: ABE, Hiroyuki, OSAKA 540-6207 (JP); URIU, Eiichi, OSAKA 540-6207 (JP); HASEGAWA, Kazuya, OSAKA 540-6207 (JP); ISHIBASHI, Tasuku, OSAKA 540-6207 (JP); NONAKA, Masataka, OSAKA 540-6207 (JP); SHIMIZU, Takeshi, OSAKA 540-6207 (JP); ISHIKAWA, Haruhiko, OSAKA 540-6207 (JP)
(74) Representative: Müller-Boré & Partner Patentanwälte PartG mbB
(86) International application number: PCT/JP2018/024025
(87) International publication number: WO 2019/004135

(57) **Abstract**

Provided is a method for manufacturing a glass panel unit while cutting down consumption of energy during manufacturing and effectively curbing a decline in the degree of vacuum. A first substrate (10) and a second substrate (20) are bonded together with a sealing material (410) heated to a first temperature of 407°C or less, thus creating an internal space (510) between the first substrate (10) and the second substrate (20). A gas adsorbent (44) including a non-metallic getter material is placed in the internal space (510). In an activating step, the gas adsorbent (44) is locally heated to a second temperature higher than the first temperature.

## Description

### Technical Field

The present disclosure relates to a method for manufacturing a glass panel unit.

### Background Art

Methods for manufacturing a glass panel unit with excellent thermal insulation properties have been proposed in the art. For example, according to the method disclosed in Patent Literature 1, while a sealing material and an adsorbent are arranged between a pair of glass panes, the entire assembly is heated in a melting furnace to 465°C, which is a temperature higher than 434°C as the melting point of the sealing material, thereby bonding the pair of glass panes together with the sealing material thus melted. This creates an internal space between the pair of glass panes and the sealing material.

Next, with the temperature of the melting furnace maintained at a temperature lower than 434°C, the internal space is evacuated and the adsorbent is activated at that temperature. Thereafter, the internal space is sealed up while being kept evacuated.

This manufacturing method known in the art needs maintaining the in-furnace temperature at a high temperature of 465°C when bonding the pair of glass panes together, thus consuming a lot of energy at the time of manufacturing.

To cut down the energy consumption at the time of manufacturing, a sealing material with a low melting point could be used to set a low heating temperature in the hermetically sealing step. However, the lower the heating temperature is, the more likely organic substances such as fluff remain unburned and left in the internal space. Letting such fluff and other organic substances be left in the internal space will allow the organic substances produce gases due to deterioration with time, thus causing a decline in the degree of vacuum there. In addition, a low heating temperature increases the chances of the solvent of the sealing material being left there without vaporizing. In that case, the residual solvent also produces gases that would cause a further decline in the degree of vacuum as well.

Besides, the lower the in-furnace heating temperature setting is, the less easily the adsorbent is activated, thus eventually increasing the chances of the degree of vacuum declining.

### Citation List

### Patent Literature

Patent Literature 1: WO 2014/136151 A1

### Summary of Invention

In view of the foregoing background, it is therefore an object of the present disclosure to provide a method for manufacturing a glass panel unit while cutting down the consumption of energy at the time of manufacturing and effectively curbing the decline in the degree of vacuum.

A glass panel unit manufacturing method according to an aspect of the present disclosure includes a pillar arrangement step, a gas adsorbent placement step, a bonding step, an evacuating step, a sealing step, and an activating step. The pillar arrangement step includes arranging a plurality of pillars on at least one of a first substrate or a second substrate such that the plurality of pillars are spaced apart from each other. The first substrate includes a glass pane and the second substrate includes another glass pane. The gas adsorbent placement step includes placing a gas adsorbent, including a non-metallic getter material having a porous structure, on at least one of the first substrate or the second substrate. The bonding step includes bonding the first substrate and the second substrate together with a sealing material and thereby creating an internal space, where the plurality of pillars and the gas adsorbent are located, between the first substrate, the second substrate, and the sealing material. The evacuating step includes evacuating the internal space. The sealing step includes sealing the internal space while keeping the internal space evacuated. The activating step includes activating the gas adsorbent. Specifically, the bonding step includes bonding the first substrate and the second substrate together with the sealing material heated to a first temperature of 407°C or less. The activating step includes locally heating the gas adsorbent such that the gas adsorbent comes to have a second temperature higher than the first temperature in the internal space.

### Brief Description of Drawings

FIG. 1 is a perspective view illustrating a glass panel unit according to an exemplary embodiment;
FIG. 2 is a plan view of the glass panel unit;
FIG. 3 is a cross-sectional view thereof taken along the plane A-A shown in FIG. 2;
FIG. 4 is a perspective view illustrating a process step for manufacturing the glass panel unit;
FIG. 5 is a plan view illustrating a work in progress of the glass panel unit;
FIG. 6 is a cross-sectional view thereof taken along the plane B-B shown in FIG. 5;
FIG. 7 is a partially cutaway side view of a main part illustrating how to evacuate an internal space of the work in progress;
FIG. 8 is a partially cutaway side view of the main part illustrating how to seal the internal space of the work in progress;

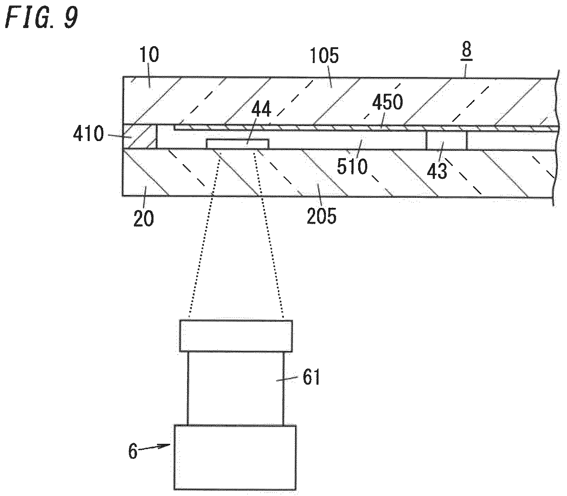

FIG. 9 is a partially cutaway side view of a main part illustrating how to activate a gas adsorbent placed in the internal space;
FIG. 10 is a partially cutaway side view of a main part illustrating how to activate the gas adsorbent according to a first variation;
FIG. 11 is a partially cutaway side view of a main part illustrating how to activate the gas adsorbent according to a second variation;
FIG. 12 is a perspective view illustrating a work in progress obtained by a manufacturing process according to a third variation;
FIG. 13 is a graph showing how an in-furnace heating temperature changes with time according to the third variation;
FIG. 14 is a perspective view illustrating a glass composite obtained by the manufacturing process according to the third variation; and
FIG. 15 is a perspective view illustrating how to cut off the glass composite.

### Description of Embodiments

### (Exemplary embodiment)

A glass panel unit according to an exemplary embodiment and a method for manufacturing the same will be described with reference to the accompanying drawings. Note that on the drawings, respective constituent members of a glass panel unit according to the exemplary embodiment are depicted only schematically.

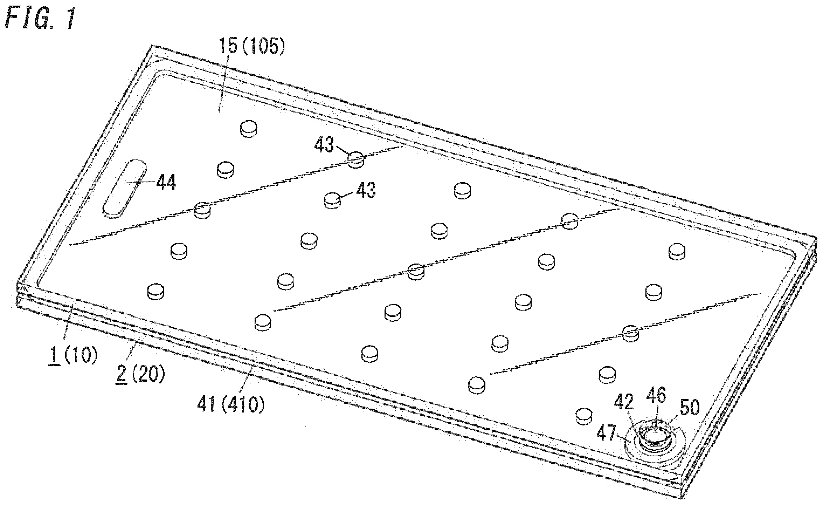

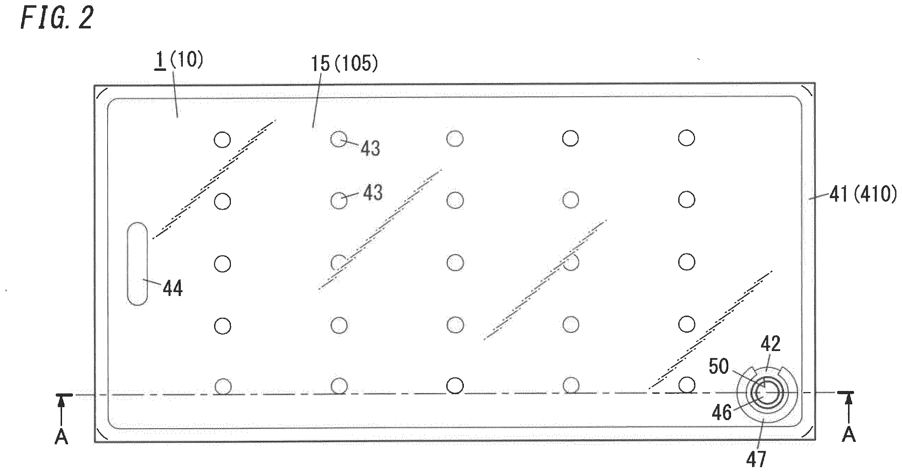

First of all, a glass panel unit according to an exemplary embodiment will be described with reference to FIGS. 1-3.

A glass panel unit according to this exemplary embodiment includes a first panel 1, a second panel 2, a sealing portion 41, a port sealing material 42, a plurality of pillars 43, and a gas adsorbent 44.

The first panel 1 and the second panel 2 are arranged to face each other with a narrow gap left between them. The first panel 1 and the second panel 2 are parallel to each other. Between the first panel 1 and the second panel 2, located are the sealing portion 41, the plurality of pillars 43, and the gas adsorbent 44.

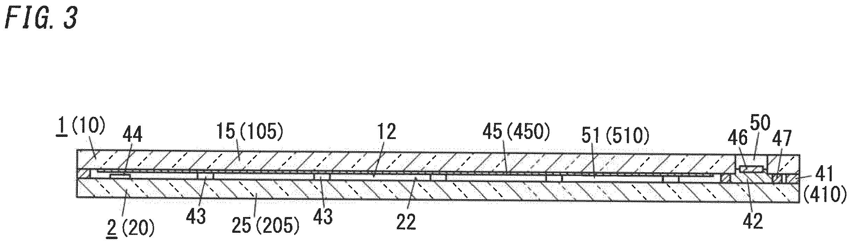

The first panel 1 includes a glass pane 15 and a low-emissivity film 45 (see FIG. 3, for example) bonded onto the glass pane 15. The low-emissivity film 45 contains a metal such as silver with low emissivity, and has the capability of reducing the transfer of heat due to radiation. The second panel 2 includes a glass pane 25.

The glass pane 15 and the glass pane 25 may be configured as any of various types of glass panes made of soda lime glass, high strain point glass, chemically tempered glass, alkali-free glass, quartz glass, Neoceram, thermally tempered glass, or any other suitable glass.

Most of a counter surface 12, facing the second panel 2, of the first panel 1 is constituted of the surface of the low-emissivity film 45. A counter surface 22, facing the first panel 1, of the second panel 2 is constituted of the surface of the glass pane 25.

The sealing portion 41 is formed in a frame shape and may be made of a glass frit with a low melting point, for example. The sealing portion 41 is hermetically bonded to respective peripheral edges of the first and second panels 1 and 2. In other words, the respective peripheral edges of the first and second panels 1 and 2 are hermetically bonded together with the sealing portion 41.

The plurality of pillars 43 are dispersed so as to be spaced apart from each other. Each of the pillars 43 is arranged in contact with both of the respective counter surfaces 12 and 22 of the first and second panels 1 and 2.

The plurality of pillars 43 are arranged to be surrounded with the sealing portion 41 in the frame shape. The plurality of pillars 43 has the capability of keeping a predetermined gap distance between the first panel 1 and the second panel 2. The plurality of pillars 43 is suitably made of a resin such as polyimide either entirely or only partially.

In the glass panel unit according to this exemplary embodiment, an evacuation port 50 is provided for the first panel 1, out of the two panels 1 and 2 (namely, the first panel 1 and the second panel 2). The evacuation port 50 is hermetically sealed up with the port sealing material 42. The port sealing material 42 may be made of a glass frit, for example. The evacuation port 50 will be used to evacuate the internal space in a process step (i.e., an evacuating step to be described later) during the manufacturing process of the glass panel unit. The evacuation port 50 penetrates through the first panel 1.

The hermetically sealed space 51, surrounded with the first panel 1, the second panel 2, and the sealing portion 41, is sealed hermetically entirely by sealing up the evacuation port 50. The hermetically sealed space 51 may be a thermally insulated space, which has been evacuated to a degree of vacuum of 0.1 Pa or less, for example.

A plate 46 arranged inside the evacuation port 50 is a member that has been used in a process step (that is a sealing step to be described later) during the manufacturing process of the glass panel unit. Optionally, the evacuation port 50 may be further stuffed with a resin to cover the plate 46.

Next, a glass panel unit manufacturing method according to an exemplary embodiment will be described.

A glass panel unit manufacturing method according to this exemplary embodiment includes a pillar arrangement step, a gas adsorbent placement step, a bonding step, an evacuating step, a sealing step, and an activating step.

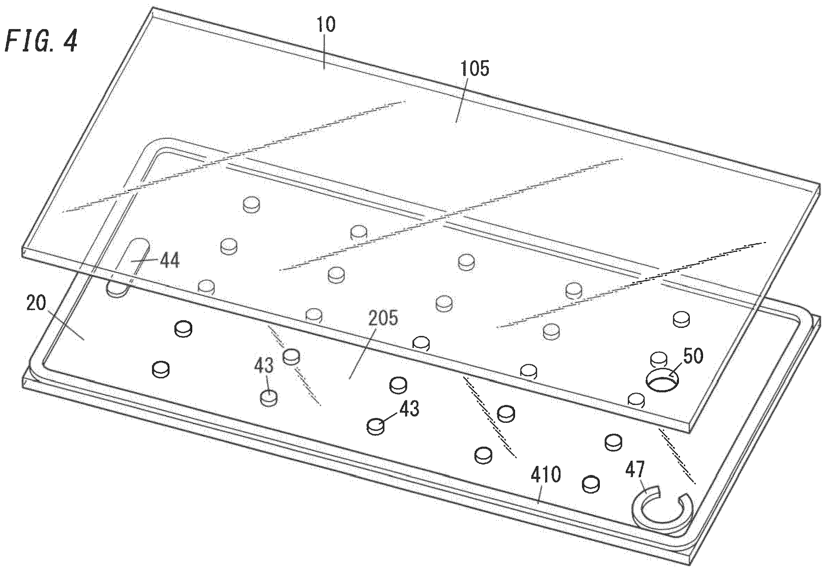

A providing step to be performed in preparation for these process steps includes providing a first substrate 10 and a second substrate 20 (see, for example, FIG. 4). The first substrate 10 will constitute the first panel 1 of the glass panel unit after going through the respective manufacturing process steps. The second substrate 20 will constitute the second panel 2 of the glass panel unit after going through the respective manufacturing process steps.

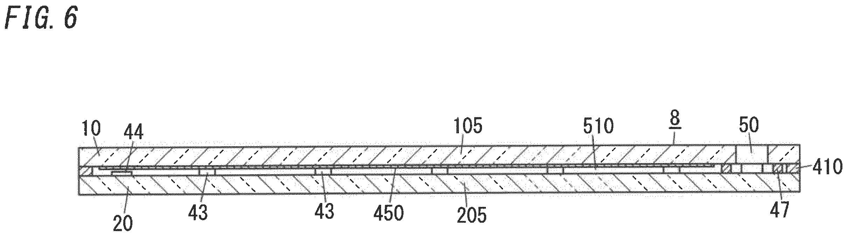

The first substrate 10 includes a glass pane 105 and a low-emissivity film 450 bonded onto the glass pane 105 (see FIG. 6). The second substrate 20 includes a glass pane 205. In the following description, the glass pane 105 will be hereinafter referred to as a "first glass pane 105" and the glass pane 205 will be hereinafter referred to as a "second glass pane 205."

The first glass pane 105 will constitute the glass pane 15 of the first panel 1 after going through the respective manufacturing process steps. The low-emissivity film 450 will constitute the low-emissivity film 45 of the first panel 1 after going through the respective manufacturing process steps, and the second glass pane 205 will constitute the glass pane 25 of the second panel 2 after going through the respective manufacturing process steps.

The pillar arrangement step includes arranging a plurality of pillars 43 on one surface (upper surface) of the second substrate 20 such that the pillars 43 are spaced apart from each other as shown in FIG. 4 and other drawings.

The gas adsorbent placement step includes placing the gas adsorbent 44 on one surface (upper surface) of the second substrate 20. Specifically, using an applicator such as a dispenser, the gas adsorbent 44 in a paste form, including a getter material, is applied onto the one surface of the second substrate 20.

The getter material included in the gas adsorbent 44 is a non-metallic getter material having a porous structure. Examples of the non-metallic getter materials include zeolite-based, active carbon, and magnesium oxide getter materials. The zeolite-based getter materials include an ion exchanged zeolite. Examples of ion exchange materials include K, NH₄, Ba, Sr, Na, Ca, Fe, Al, Mg, Li, H, and Cu.

The gas adsorbent 44 contains the non-metallic getter material having the porous structure, and therefore, is able to effectively adsorb a gas with a heavy molecular weight. Examples of such gases with heavy molecular weights include hydrocarbon based gases (such as CH4 and C2H6) and an ammonia gas (NH₃).

Any one of the pillar arrangement step or the gas adsorbent placement step may be performed earlier than the other. Alternatively, the pillar arrangement step and the gas adsorbent placement step may be performed in parallel with each other.

The bonding step includes bonding the first substrate 10 and the second substrate 20 together with a sealing material 410 in a frame shape. Specifically, the first substrate 10 and the second substrate 20 that have been loaded into a furnace with the sealing material 410 and the plurality of pillars 43 interposed between them are heated in the furnace to a first temperature (of, for example, 380°C). The first temperature is set at a temperature higher than the melting point (of, for example, 340°C) of the sealing material 410 and equal to or lower than 407°C, which is an ignition point of cotton.

Causing the sealing material 410 that has once melted (softened) due to heating to be cured and bonded onto the first substrate 10 and the second substrate 20 creates an internal space 510, where the plurality of pillars 43 and the gas adsorbent 44 are located, between the first and second substrates 10 and 20 and the sealing material 410. The sealing material 410 will constitute the sealing portion 41 of the glass panel unit after going through the respective process steps.

The sealing material 410 is applied, using an appropriate applicator, in a frame shape onto an outer peripheral portion of one surface of the second substrate 20 (glass pane 205) (see FIG. 4). In addition, a material for a dam 47 is also applied, using an appropriate applicator, onto a predetermined region of the one surface of the second substrate 20. The dam 47 may be formed in the shape of an incomplete ring. For example, the dam 47 may be a C-ring. The sealing material 410 and the dam 47 are suitably made of the same material such as a glass frit.

The sealing material 410 and the dam 47 may be arranged before, after, or during the pillar arrangement step. In addition, the sealing material 410 and the dam 47 may be arranged before, after, or during the gas adsorbent placement step.

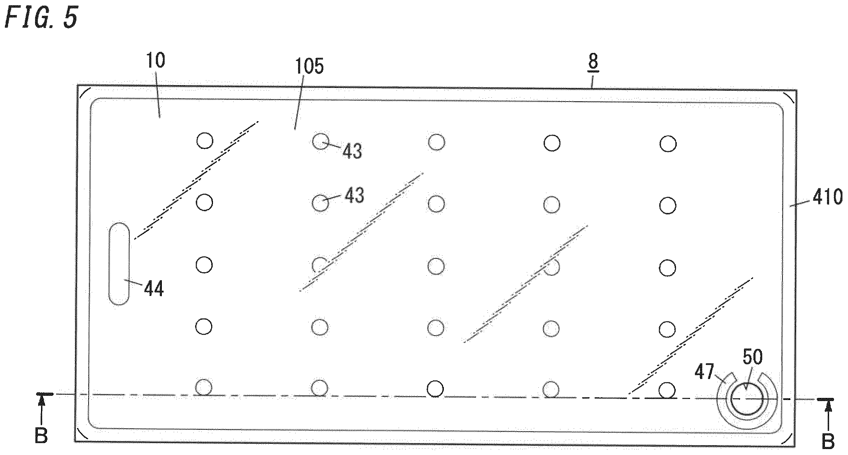

A work in progress 8 such as the one shown in FIGS. 5 and 6 is obtained as a result of the process steps described above. The work in progress 8 is an intermediate product obtained during the manufacturing process of the glass panel unit.

This work in progress 8 is further subjected to the evacuating step, the sealing step, and the activating step.

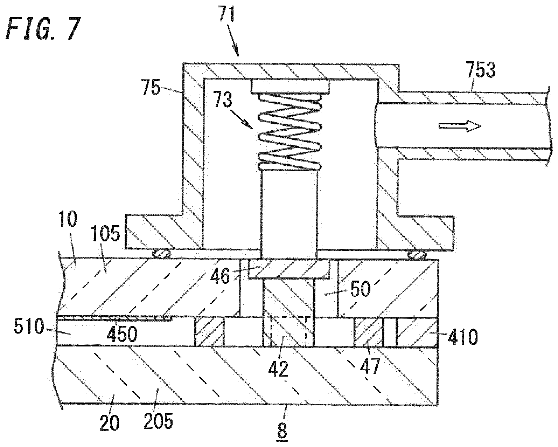

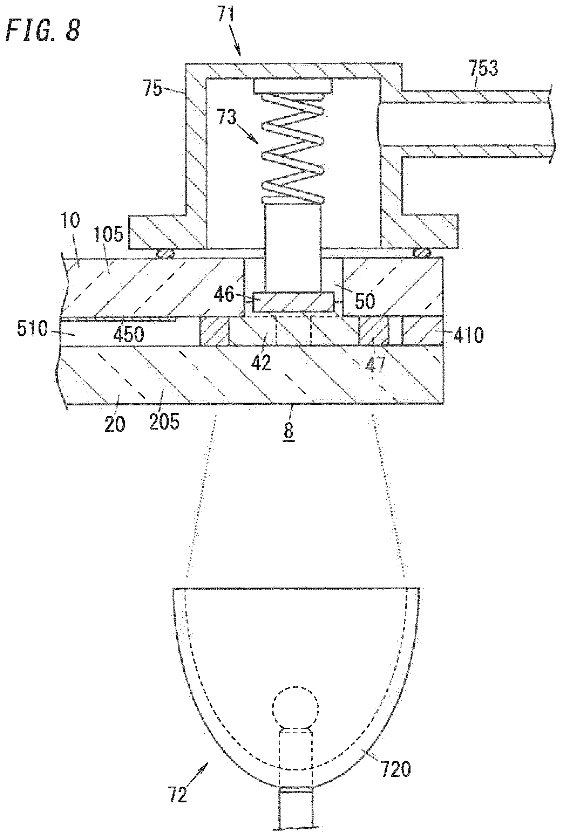

The evacuating step and the sealing step are carried out using the system shown in FIGS. 7 and 8. This system includes an evacuating mechanism 71, a heating mechanism 72, and a pressing mechanism 73.

The evacuating mechanism 71 includes: an evacuation head 75 to be pressed against the work in progress 8; and a connection pipe 753 connected to the evacuation head 75. The evacuating mechanism 71 is configured to evacuate, through the evacuation port 50, the internal space 510 created in the work in progress 8 and keep the internal space 510 evacuated.

The heating mechanism 72 is arranged opposite from the evacuation head 75 with respect to the work in progress 8 (see FIG. 8). The heating mechanism 72 is configured to heat the port sealing material 42, inserted into the evacuation port 50, without making physical contact with the port sealing material 42.

The heating mechanism 72 includes an irradiator 720. The irradiator 720 is configured to irradiate the port sealing material 42, inserted into the evacuation port 50, with an infrared ray externally incident through the second substrate 20 (second glass pane 205) and thereby heat the port sealing material 42. The infrared ray is suitably a near-infrared ray.

The pressing mechanism 73 is provided for the evacuation head 75. The pressing mechanism 73 is configured to press, in a state where the internal space 510 is evacuated by the evacuating mechanism 71, the port sealing material 42 inserted into the evacuation port 50 toward the second substrate 20.

In the evacuating step, the port sealing material 42 and a plate 46, both having a smaller diameter than the evacuation port 50, are inserted into the evacuation port 50 of the work in progress 8 (see FIG. 7). The port sealing material 42 is a solid sealing material made of a glass frit, for example. In this embodiment, the port sealing material 42 has a block shape. However, this is only an example and should not be construed as limiting. Alternatively, the port sealing material 42 may also have the shape of a cylinder with a vertically penetrating through hole. The plate 46 is located opposite from the second substrate 20 with respect to the port sealing material 42.

Next, the evacuation head 75 is brought into airtight contact with a region, surrounding the opening formed by the evacuation port 50, of the first substrate 10. At this time, the port sealing material 42 and the plate 46 are pressed elastically toward the second substrate 20.

Exhausting the air in the evacuation head 75 in such a state through the connection pipe 753 (as indicated by the open arrow shown in FIG. 7) allows the internal space 510 to be evacuated through the evacuation port 50.

The sealing step includes sealing, using the heating mechanism 72 and the pressing mechanism 73, the internal space 510 while keeping the internal space 510 evacuated.

The sealing step includes heating and melting the port sealing material 42 using the heating mechanism 72 and pressing the port sealing material 42 against the second substrate 20 with the biasing force applied by the pressing mechanism 73 via the plate 46. The port sealing material 42 is deformed in the internal space 510 to the point of coming into contact with an inner peripheral surface of the dam 47. The cut of the dam 47 is closed and sealed up by the port sealing material 42 thus deformed.

This allows the evacuation port 50 to be sealed up with the port sealing material 42, thus hermetically sealing the internal space 510 while keeping the internal space 510 evacuated. This internal space 510 will constitute the hermetically sealed space 51 of the glass panel unit after going through the respective process steps.

Next, the activating step will be described.

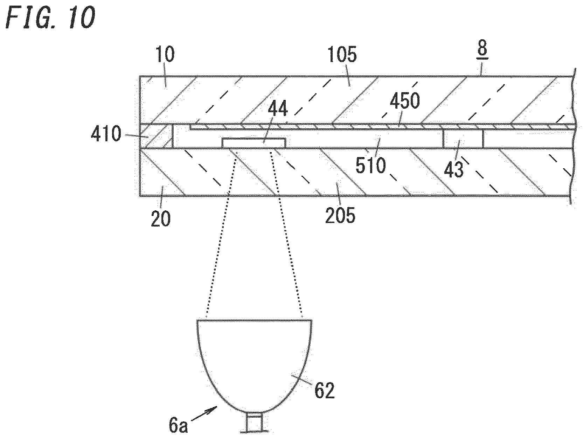

The activating step includes locally heating the gas adsorbent 44, placed in the internal space 510 of the work in progress 8, to a second temperature (of, for example, 600°C) using the local heating mechanism 6 shown in FIG. 10. The second temperature is a temperature higher than the activation temperature of the getter material included in the gas adsorbent 44, and is suitably higher than 500°C, and more suitably higher than 600°C.

The second temperature is higher than a temperature (the first temperature) at which the sealing material 410 is melted in the bonding step. The activation temperature of the getter material included in the gas adsorbent 44 is higher than the first temperature.

In other words, the activation temperature of the getter material included in the gas adsorbent 44 is higher than the first temperature and lower than the second temperature.

The local heating mechanism 6 includes an irradiator 61 configured to emit a laser beam. The irradiator 61 is able to irradiate the gas adsorbent 44, placed in the internal space 510, with a laser beam externally incident through the second substrate 20 (second glass pane 205). This allows the gas adsorbent 44 to be heated by a noncontact method.

The activating step is suitably carried out in parallel with the evacuating step. That is to say, while the internal space 510 is being evacuated using the evacuation head 75, the gas adsorbent 44 is suitably locally heated by a noncontact method, and thereby activated in the internal space 510 being kept evacuated.

The gas adsorbent 44 contains the non-metallic getter material having a porous structure (such as zeolite subjected to Cu ion exchange). Thus, locally heating the gas adsorbent 44 causes molecules of the gas that has been adsorbed, such as a hydrocarbon based gas or an ammonia gas, to be desorbed from the gas adsorbent 44, thus activating the gas adsorbent 44. The gas molecules desorbed from the gas adsorbent 44 are sucked by the evacuating mechanism 71 through the evacuation port 50. The sealing step will start to be performed when the gas adsorbent 44 has been activated sufficiently through the activating step.

Optionally, the gas adsorbent 44 may be locally heated in the activating step after the sealing step has been performed. In that case, the internal space 510 that has been sealed while being kept evacuated is irradiated with a laser beam, thereby activating the gas adsorbent 44 through local heating.

The glass panel unit obtained by the manufacturing method described above has the hermetically sealed space 51 that has been sealed while being kept evacuated. In the hermetically sealed space 51, housed is the gas adsorbent 44 that has been activated sufficiently. This curbs the decline in the degree of vacuum in the hermetically sealed space 51, thus maintaining the overall thermal insulation properties of the glass panel unit.

In addition, during the manufacturing process of the glass panel unit, the in-furnace temperature is lowered, thus cutting down the energy consumption during the manufacturing process. Nevertheless, in that case, an organic substance such as fluff tends to be left in the hermetically sealed space 51 of the glass panel unit, thus increasing the chances of emitting a hydrocarbon based gas. Furthermore, lowering the in-furnace temperature often causes the solvent of the sealing material 410 to be left partially without vaporizing fully, thus also increasing the chances of a hydrocarbon-based gas being produced. Besides, the hydrocarbon based gas and ammonia gas often tend to be emitted from the pillars 43 including a resin as well.

To overcome these problems, the glass panel unit obtained by the manufacturing method described above makes the gas adsorbent 44, including the getter material (such as a zeolite or active carbon) activated through local heating, effectively adsorb those gases (such as the hydrocarbon based gas and the ammonia gas).

### (Variations)

The glass panel unit and manufacturing method thereof described above may be appropriately modified depending on a design choice or any other factor, as will be described below. In the following description of variations, any constituent element, having the same function as a counterpart of the exemplary embodiment described above, will be designated by the same reference numeral as that counterpart's, and a detailed description thereof will be omitted herein.

In the glass panel unit manufacturing method described above, the plurality of pillars 43 are arranged on the one surface of the second substrate 20 in the pillar arrangement step. However, the plurality of pillars 43 may be arranged on at least one of the first and second substrates 10 and 20. That is to say, the plurality of pillars 43 may be arranged on the first substrate 10 or may be distributed on the first substrate 10 and the second substrate 20.

Also, in the glass panel unit manufacturing method described above, the gas adsorbent 44 is placed on the one surface of the second substrate 20 in the gas adsorbent placement step. However, the gas adsorbent 44 may be placed on at least one of the first and second substrates 10 and 20. That is to say, the gas adsorbent 44 may be placed on the first substrate 10 or may be placed on both of the first substrate 10 and the second substrate 20. Optionally, two or more gas adsorbents 44 may be placed.

In the glass panel unit manufacturing method described above, the gas adsorbent 44 is irradiated, in the activating step, with a laser beam through the second substrate 20. However, this is only an example and should not be construed as limiting. Rather, the gas adsorbent 44 may be irradiated with the laser beam through at least one of the first substrate 10 or the second substrate 20. When the gas adsorbent 44 is irradiated with a laser beam through the first substrate 10, the first substrate 10 suitably includes no low-emissivity films 450.

Furthermore, in the glass panel unit manufacturing method described above, the gas adsorbent 44 includes a non-metallic getter material having a porous structure. However, this is only an example and should not be construed as limiting. Rather, the gas adsorbent 44 may include not only the non-metallic getter material but also a metallic getter material as well.

The metallic getter material has a metallic surface with the ability to chemically adsorb gas molecules. Examples of the metallic getter materials include a zirconium-based (such as Zr-Al or Zr-V-Fe) getter material and a titanium-based getter material. When containing the metallic getter material, the gas adsorbent 44 is able to efficiently adsorb molecules of a gas such as H₂O, N₂, O₂, H₂, or CO₂ that the non-metallic getter material is unable to adsorb easily.

As used herein, activating the gas adsorbent 44 means activating the non-metallic getter material. If the gas adsorbent 44 further includes a metallic getter material, activating the gas adsorbent 44 means activating both the non-metallic getter material and the metallic getter material.

Furthermore, according to the glass panel unit manufacturing method described above, the gas adsorbent 44 is heated with the energy of a laser beam. However, this is only an example and should not be construed as limiting. Alternatively, the gas adsorbent 44 may also be heated with the energy of any other active ray such as an infrared ray. The infrared ray is suitably a near-infrared ray.

In that case, as in a first variation illustrated in FIG. 10, for example, a local heating mechanism 6a includes an irradiator 62 with the ability to radiate an infrared ray. The irradiator 62 is configured to irradiate the gas adsorbent 44, placed in the internal space 510, with an infrared ray externally incident through the second substrate 20 (second glass pane 205) and heat the gas adsorbent 44 by a non-contact method. The gas adsorbent 44 may be irradiated with the infrared ray through at least one of the first substrate 10 or the second substrate 20.

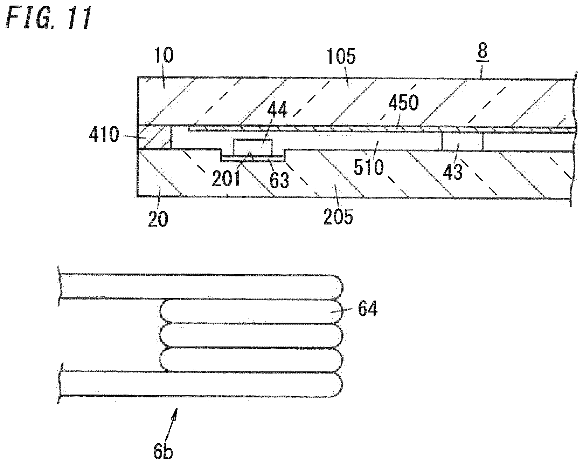

Alternatively, as in a second variation illustrated in FIG. 11, a metallic member 63 arranged in contact with the gas adsorbent 44 in the internal space 510 may be heated with electricity supplied so that the gas adsorbent 44 is locally heated through the metallic member 63.

In the second variation, a bottomed groove 201 is formed on a counter surface, facing the first substrate 10, of the second substrate 20. In the gas adsorbent placement step, a sheet of the metallic member 63 is fixed on the bottom of the groove 201 and the gas adsorbent 44 in solid phase is fixed on the metallic member 63. Note that the metallic member 63 and the gas adsorbent 44 do not have to be arranged on the groove 201 but may be arranged on a flat surface of the second substrate 20 as well.

In the activating step according to the second variation, the local heating mechanism 6b may include a magnetic field generator 64 in a coil shape. Installing the magnetic field generator 64 outside and supplying AC power to the magnetic field generator 64 causes an overcurrent to be generated in the metallic member 63, thus allowing the metallic member 63 to be heated inductively. The activating step according to the second variation allows the gas adsorbent 44 to be locally heated in the internal space 510 through the metallic member 63 being heated by a non-contact method.

Another means for heating the metallic member 63 with electricity supplied may be extending an electrode that is electrically connected to the metallic member 63, and electrically connecting the extended electrode to a power supply outside of the glass panel unit. In that case, the gas adsorbent 44 may also be heated locally through the metallic member 63 being heated with the electricity supplied.

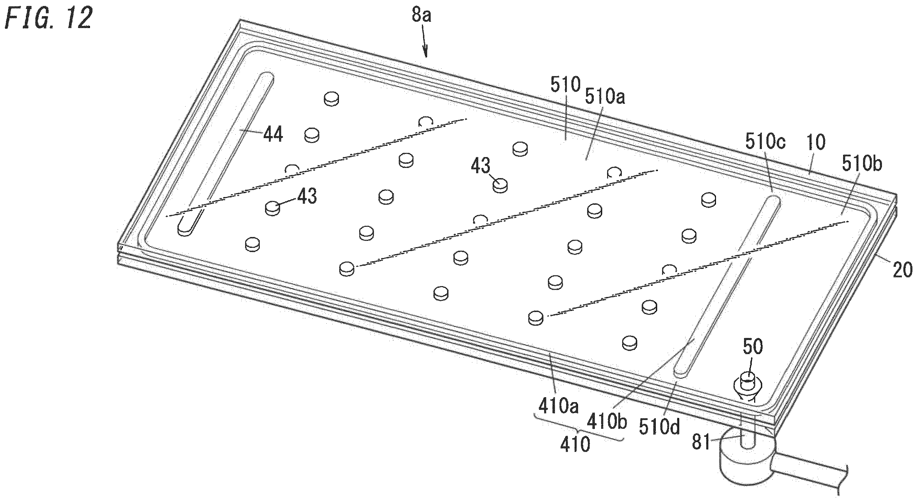

Still alternatively, the internal space 510 may also be sealed by a method according to a third variation shown in FIGS. 12-15.

In the third variation, the sealing material 410 arranged on the second substrate 20 includes a frame 410a and a partition 410b. The partition 410b suitably has a higher melting point than the frame 410a. Alternatively, the partition 410b and the frame 410a may have the same melting point as well. The sealing material 410 is suitably a material with a melting point of 300°C or less. For example, a vanadium-based seal frit is suitably used as the sealing material 410. The partition 410b is formed in a straight line shape in a region surrounded with the frame 410a.

In the third variation, a work in progress 8a is formed through the bonding step. In the work in progress 8a, the internal space 510 is created between the first substrate 10, the second substrate 20, and the frame 410a. The partition 410b is located in the internal space 510. The partition 410b separates the internal space 510 into a first space 510a and a second space 510b. Nevertheless, neither end of the partition 410b is in contact with the frame 410a.

Also, in the third variation, the evacuation port 50 is cut through the second substrate 20 so as to communicate with the second space 510b out the two separated spaces of the internal space 510. The gas adsorbent 44 and the plurality of pillars 43 are arranged in the first space 510a out the two separated spaces of the internal space 510.

The internal space 510 of the work in progress 8a includes two air passages 510c and 510d. Each of these two air passages 510c and 510d connects the first space 510a to the second space 510b. Each of the two air passages 510c and 510d is a gap left between the partition 410b and the frame 410a.

In the bonding step according to the third variation, the frame 410a once softened by being heated and then cured is hermetically bonded onto the first substrate 10 and the second substrate 20. In the bonding step, the partition 410b is hardly deformed.

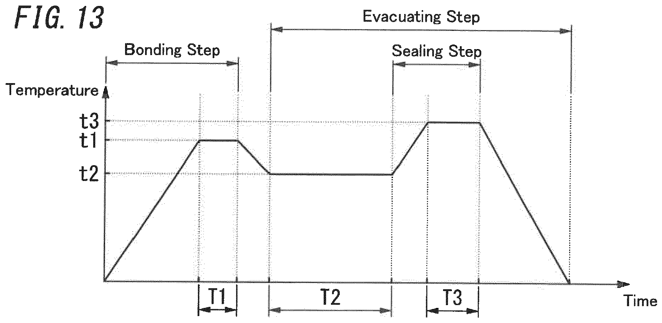

FIG. 13 is a graph showing how the heating temperature (in-furnace temperature) changes with time. In the bonding step, heating at a first temperature t1 is conducted for a first predetermined amount of time T1.

The first temperature t1 is a temperature higher than the melting point of the frame 410a. The first temperature t1 may be 270°C, for example. The first predetermined amount of time T1 may be 15 minutes, for example.

In the evacuating step according to the third variation, the first space 510a is evacuated through the air passages 510c and 510d, the second space 510b, and the evacuation port 50 of the work in progress 8a. In this process step, the evacuation is performed using a vacuum pump through an evacuation pipe 81 connected to the evacuation port 50.

In the evacuating step, the work in progress 8a is heated at a second temperature t2 lower than the first temperature t1 (see FIG. 13) for a second predetermined amount of time T2. The second temperature t2 may be 250°C, for example. The second predetermined amount of time T2 may be 60 minutes, for example.

In the third variation, the activating step is performed in parallel with the evacuating step.

In the activating step, the gas adsorbent 44 placed in the internal space 510 (more specifically, the first space 510a) of the work in progress 8a is irradiated with a laser beam, for example, and thereby locally heated to a second temperature (of, for example, 600°C). The second temperature is a temperature higher than the activation temperature of the getter material included in the gas adsorbent 44, and is suitably higher than 500°C, and more suitably higher than 600°C.

The second temperature is sufficiently higher than the first temperature t1 at which the sealing material 410 is melted in the bonding step. In addition, the second temperature is sufficiently higher than not only the temperature t2 at which the work in progress 8a is heated in the evacuating step but also a temperature t3 at which the work in progress 8a is heated in the sealing step (to be described later).

In the third variation, after the activating step has been performed, the sealing step is performed. The sealing step is performed in parallel with the evacuating step.

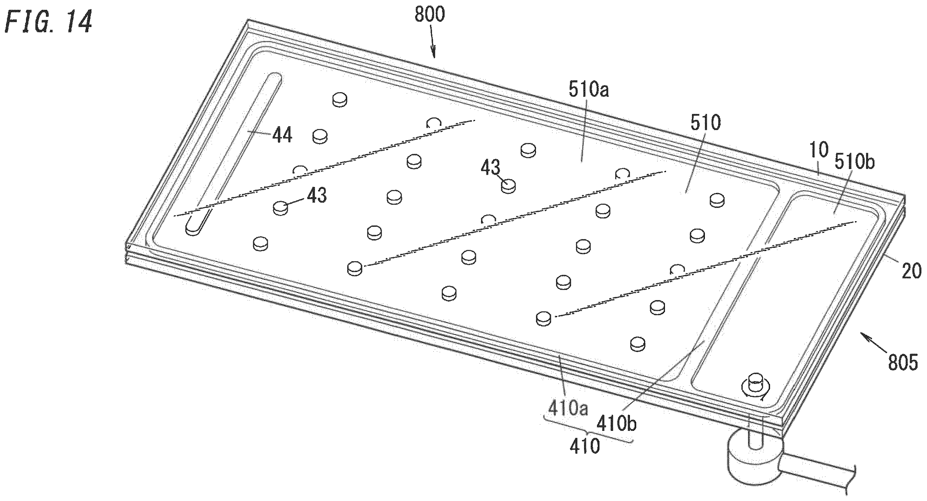

In the sealing step, while the internal space 510 is being evacuated, the partition 410b is melted by being heated, thus closing the air passages 510c and 510d with the partition 410b deformed. At a point in time when the sealing step is finished, there are no air passages 510c, 510d in the internal space 510 (see FIG. 14).

When the sealing step is finished, the first space 510a and the second space 510b are hermetically separated from each other by the partition 410b deformed. As used herein, "seal the internal space" may refer to a situation where the internal space 510 is sealed only partially (i.e., only in the first space 510a) as in the third variation.

As shown in FIG. 13, in the sealing step, the work in progress 8a is heated at a temperature t3 for a third predetermined amount of time T3. The temperature t3 is higher than the first temperature t1, the temperature t2, and the melting point of the partition 410b. The temperature t3 may be 300°C, for example. The third predetermined amount of time T3 may be 30 minutes, for example.

In the third variation, the glass composite 800 shown in FIG. 14 is obtained by going through the respective process steps described above. Removing a portion 805 including the second space 510b and the evacuation port 50 from the glass composite 800 completes a glass panel unit with the evacuated first space 510a.

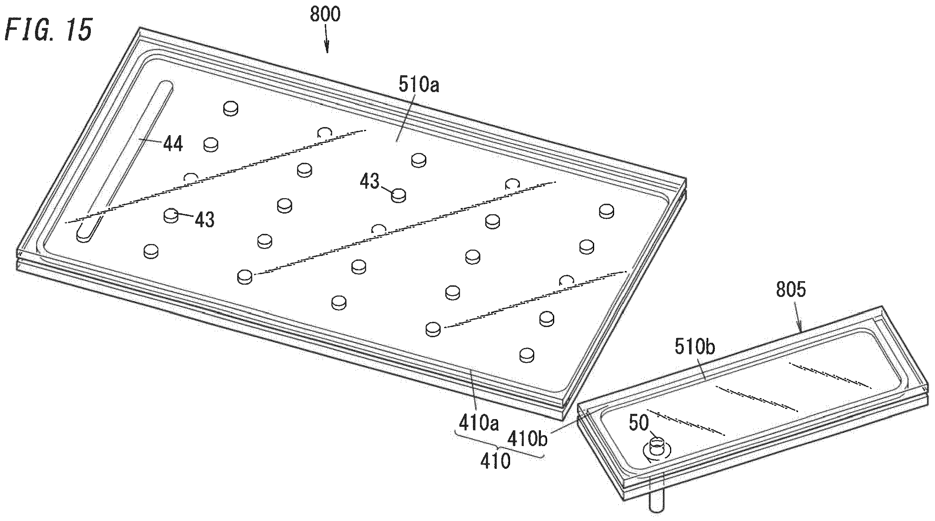

As shown in FIG. 15, in the step of removing the portion 805 (i.e., in the removing step), the glass composite 800 is cut off along the partition 410b. Alternatively, the glass composite 800 may also be cut off along a line passing through the second space 510b.

In the third variation, the gas adsorbent 44 is activated in the furnace. However, the gas adsorbent 44 is not necessarily activated at this timing.

For example, the gas adsorbent 44 may be activated by being locally heated outside of the furnace after the glass composite 800 has been formed by performing the bonding, evacuating, and sealing steps inside the furnace.

Alternatively, after the glass composite 800 has been formed by activating the gas adsorbent 44 only to a certain degree while performing the evacuating step inside of the furnace, the gas adsorbent 44 may be further activated outside of the furnace. In that case, the gas adsorbent 44 is activated to a certain degree according to the heating temperature inside of the furnace and then is locally heated outside of the furnace.

If the gas adsorbent 44 includes not only the non-metallic getter material but also a metallic getter material, the non-metallic getter material and the metallic getter material may be both activated by locally heating the gas adsorbent 44 either inside or outside of the furnace. Alternatively, after the glass composite 800 has been formed by activating the non-metallic getter material to a certain degree according to the heating temperature inside the furnace, the gas adsorbent 44 may be locally heated outside of the furnace. In that case, locally heating the gas adsorbent 44 outside of the furnace allows the non-metallic getter material to be further activated and also allows the metallic getter material to be activated as well.

If the gas adsorbent 44 includes both the non-metallic getter material and the metallic getter material, then the gas adsorbent 44 may be locally heated by inductively heating the metallic getter material included in the gas adsorbent 44.

### (Aspects)

As can be seen from the foregoing description of an exemplary embodiment and its variations, a glass panel unit manufacturing method according to a first aspect includes a pillar arrangement step, a gas adsorbent placement step, a bonding step, an evacuating step, a sealing step, and an activating step.

The pillar arrangement step includes arranging a plurality of pillars (43) on at least one of a first substrate (10) or a second substrate (20) such that the plurality of pillars (43) are spaced apart from each other. The first substrate (10) includes a glass pane (105) and the second substrate (20) includes another glass pane (205). The gas adsorbent placement step includes placing a gas adsorbent (44) on at least one of the first substrate (10) or the second substrate (20). The gas adsorbent (44) includes a non-metallic getter material having a porous structure. The bonding step includes bonding the first substrate (10) and the second substrate (20) together with a sealing material (410) and thereby creating an internal space (510), where the plurality of pillars (43) and the gas adsorbent (44) are located, between the first substrate (10), the second substrate (20), and the sealing material (410). The evacuating step includes evacuating the internal space (510). The sealing step includes sealing the internal space (510) while keeping the internal space (510) evacuated. The activating step includes activating the gas adsorbent (44). Specifically, the bonding step includes bonding the first substrate (10) and the second substrate (20) together with the sealing material (410) heated to a first temperature of 407°C or less. The activating step includes locally heating the gas adsorbent (44) such that the gas adsorbent (44) comes to have a second temperature higher than the first temperature in the internal space (510).

The glass panel unit manufacturing method according to the first aspect cuts down the energy consumption during the manufacturing process by lowering the heating temperature in the sealing step. Generally speaking, in the internal space (510), a hydrocarbon based gas tends to be emitted from not only an organic substance such as residual fluff but also the sealing material (410) as well. The gas thus emitted is effectively adsorbed into the gas adsorbent (44) including a non-metallic getter material that has been activated through local heating. Thus, the glass panel unit manufacturing method according to the first aspect cuts down the energy consumption during the manufacturing process and effectively curbs a decline in the degree of vacuum in the internal space (510).

A glass panel unit manufacturing method according to a second aspect, which may be implemented in conjunction with the first aspect, has the following additional feature. Specifically, in the glass panel unit manufacturing method according to the second aspect, the activating step includes locally heating the gas adsorbent (44) with energy of light that irradiates the gas adsorbent (44) through at least one of the first substrate (10) or the second substrate (20).

The glass panel unit manufacturing method according to the second aspect allows the gas adsorbent (44) placed in the internal space (510) to be locally heated by a non-contact method.

A glass panel unit manufacturing method according to a third aspect, which may be implemented in conjunction with the second aspect, has the following additional feature. Specifically, in the glass panel unit manufacturing method according to the third aspect, the activating step includes locally heating the gas adsorbent (44) with energy of a laser beam that irradiates the gas adsorbent (44).

The glass panel unit manufacturing method according to the third aspect allows the gas adsorbent (44) placed in the internal space (510) to be locally heated with a laser beam by a non-contact method.

A glass panel unit manufacturing method according to a fourth aspect, which may be implemented in conjunction with the second aspect, has the following additional feature. Specifically, in the glass panel unit manufacturing method according to the fourth aspect, the activating step includes locally heating the gas adsorbent (44) with energy of an infrared ray that irradiates the gas adsorbent (44).

The glass panel unit manufacturing method according to the fourth aspect allows the gas adsorbent (44) placed in the internal space (510) to be locally heated with an infrared ray by a non-contact method.

A glass panel unit manufacturing method according to a fifth aspect, which may be implemented in conjunction with the first aspect, has the following additional feature. Specifically, in the glass panel unit manufacturing method according to the fifth aspect, the gas adsorbent placement step includes further arranging a metallic member (63) in contact with the gas adsorbent (44), and the activating step includes locally heating the gas adsorbent (44) through the metallic member (63) being heated with electricity supplied.

The glass panel unit manufacturing method according to the fifth aspect allows the gas adsorbent (44) placed in the internal space (510) to be efficiently locally heated through the metallic member (63).

A glass panel unit manufacturing method according to a sixth aspect, which may be implemented in conjunction with the fifth aspect, has the following additional feature. Specifically, in the glass panel unit manufacturing method according to the sixth aspect, the activating step includes locally heating the gas adsorbent (44) through the metallic member (63) that is heated inductively.

The glass panel unit manufacturing method according to the sixth aspect allows the gas adsorbent (44) placed in the internal space (510) to be locally heated through the metallic member (63) being heated by a non-contact method.

A glass panel unit manufacturing method according to a seventh aspect, which may be implemented in conjunction with any one of the first to sixth aspects, has the following additional feature. Specifically, in the glass panel unit manufacturing method according to the seventh aspect, the activating step includes locally heating the gas adsorbent (44) in parallel with the evacuating step.

The glass panel unit manufacturing method according to the seventh aspect allows the gas emitted from the gas adsorbent (44) in the activating step to be exhausted from the internal space (510) in the evacuating step, thus maintaining the degree of vacuum more easily in the internal space (510).

A glass panel unit manufacturing method according to an eighth aspect, which may be implemented in conjunction with any one of the first to seventh aspects, has the following additional feature. Specifically, in the glass panel unit manufacturing method according to the eighth aspect, the non-metallic getter material is a zeolite-based, active carbon, or magnesium oxide getter material.

The glass panel unit manufacturing method according to the eighth aspect allows the gas adsorbent (44) to effectively adsorb a hydrocarbon-based gas, an ammonia gas, and other gases.

A glass panel unit manufacturing method according to a ninth aspect, which may be implemented in conjunction with any one of the first to eighth aspects, has the following additional feature. Specifically, in the glass panel unit manufacturing method according to the ninth aspect, the gas adsorbent (44) further includes a metallic getter material having a metallic surface with the ability to adsorb gas molecules.

The glass panel unit manufacturing method according to the ninth aspect allows even gas molecules, which are not easily adsorbed into a non-metallic getter material, to be adsorbed effectively.

### Reference Signs List

- 10: First Substrate
- 105: (First) Glass Pane
- 20: Second Substrate
- 205: (Second) Glass Pane
- 410: Sealing material
- 43: Pillar
- 44: Gas Adsorbent
- 510: Internal Space
- 63: Metallic Member

## Claims

1. A method for manufacturing a glass panel unit, the method comprising:
a pillar arrangement step of arranging a plurality of pillars on at least one of a first substrate or a second substrate such that the plurality of pillars are spaced apart from each other, the first substrate including a glass pane, the second substrate including another glass pane;
a gas adsorbent placement step of placing a gas adsorbent, including a non-metallic getter material having a porous structure, on at least one of the first substrate or the second substrate;
a bonding step of bonding the first substrate and the second substrate together with a sealing material and thereby creating an internal space, where the plurality of pillars and the gas adsorbent are located, between the first substrate, the second substrate, and the sealing material;
an evacuating step of evacuating the internal space;
a sealing step of sealing the internal space while keeping the internal space evacuated; and
an activating step of activating the gas adsorbent,
the bonding step including bonding the first substrate and the second substrate together with the sealing material heated to a first temperature of 407°C or less,
the activating step including locally heating the gas adsorbent such that the gas adsorbent comes to have a second temperature higher than the first temperature in the internal space.

2. The method of claim 1, wherein
the activating step includes locally heating the gas adsorbent with energy of light that irradiates the gas adsorbent through at least one of the first substrate or the second substrate.

3. The method of claim 2, wherein
the activating step includes locally heating the gas adsorbent with energy of a laser beam that irradiates the gas adsorbent.

4. The method of claim 2, wherein
the activating step includes locally heating the gas adsorbent with energy of an infrared ray that irradiates the gas adsorbent.

5. The method of claim 1, wherein
the gas adsorbent placement step includes further arranging a metallic member in contact with the gas adsorbent, and
the activating step includes locally heating the gas adsorbent through the metallic member being heated with electricity supplied.

6. The method of claim 5, wherein
the activating step includes locally heating the gas adsorbent through the metallic member being heated inductively.

7. The method of any one of claims 1 to 6, wherein
the activating step includes locally heating the gas adsorbent in parallel with the evacuating step.

8. The method of any one of claims 1 to 7, wherein
the non-metallic getter material is a zeolite-based, active carbon, or magnesium oxide getter material.

9. The method of any one of claims 1 to 8, wherein
the gas adsorbent further includes a metallic getter material having a metallic surface with the ability to adsorb gas molecules.
